# EUROPEAN PATENT APPLICATION

(11) **EP 1 503 325 A1**
(43) Date of publication of application: **02.02.2005**
(21) Application number: 04254610.1
(22) Date of filing: 30.07.2004
(51) Int. Cl.: G06K 9/32, G06F 17/30, G06K 7/10

(54) **Smart symbols**

(30) Priority: 01.08.2003 GB 0318097
(71) Applicant: The Secretary of State acting through Ordnance Survey, Maybush, Southampton SO16 4GU (GB)
(72) Inventor: Phillips, Christopher Frank, Southampton, Hampshire SO16 4GU (GB)
(74) Representative: Harris, Ian Richard

(57) **Abstract**

Information concerning an entity can be obtained by capturing an image including a representation of the entity and by comparing the image to stored representations. Information relating to the entity can thereby be identified and outputted. The comparing can be performed either locally or remotely to the capturing of the image. In one embodiment, a mobile device such as a mobile telephone comprising a camera captures an image of the representation and transmits it to a server. The server then performs the comparing, retrieves the information relating to the entity and returns it to the mobile device for outputting.

## Description

The present invention relates to obtaining up to date information concerning entities such as hotels, bed and breakfast accommodation, restaurants, public houses (pubs), cinemas and so forth.

Information concerning entities of this kind has traditionally been published in guide books, brochures, advertisements and the like.

The type of information concerned may for example include film screening times at a cinema, the menu of a restaurant, price information, the geographical location of an entity, details on availability and any other facts which may be useful.

The amount of information which can be provided in the more traditional formats indicated above is often limited since only a certain amount of space may be used (particularly in the case of advertisements). Accordingly, it may not be possible to provide comprehensive information relating to the entity. Also, the information which is provided may not be up to date or indeed updateable. Brochures and guide books for example are generally published periodically (perhaps annually) whereby in the interests of accuracy, only information which is likely to remain pertinent for the entire publishing period can be used. Similar considerations apply to advertisements since these cannot be updated once published. Accordingly, for example, up to date information concerning the availability of rooms in a public house that provides bed and breakfast can generally not be provided using these formats.

Alternatively, information concerning the entity can be obtained by means of a phone call or by visiting the relevant Internet site. However, information obtained by such means presupposes that the correct telephone number or Internet address is known.

Where an entity is indicated on a map, the location of the entity can be ascertained by consulting the map. However, due to constraints of space on the map itself, information other than the type of entity (e.g. public house) and the location of the entity is usually not given.

Accordingly, the invention seeks to provide a convenient and efficient way of providing/obtaining comprehensive and up to date information concerning entities such as those indicated above, those entities generally being associated with a geographical location.

### SUMMARY OF THE INVENTION

Aspects of the invention are defined in the accompanying independent and dependent claims.

An aspect of the invention provides a method of obtaining information concerning a first entity, the method comprising:
an apparatus capturing an image including a representation of the first entity, the representation being one of a plurality of representations of entities displayed on a carrier, wherein each representation is a representation of a class of entity and identifies a specific instance of the class, and wherein the specific instance identified by the representation included in the captured image is said first entity;
comparing the captured image to stored representations to find at least one match to the representation included in the captured image, thereby to identify the class and specific instance of the class represented by the representation included in the image and further information relating to the first entity; and
retrieving the information and outputting the information.

Representations of the entity can be displayed in suitable locations for capturing, whereby the claimed method allows information concerning the entity to be obtained. Since the information may be stored in an updateable format and also in suitable quantities, up to date and comprehensive information concerning the entity can be obtained.

The representation may for example specify the class of entity which it represents (for example, a public house), or indeed a specific instance of the class (for example, 'The Red Lion'). To indicate the specific instance of the class, the representation can include an identifier such as an alphanumeric identifier. In some examples, the representation may comprise a graphical representation such as a mapping symbol. The representation may be captured by an image capture device such as a camera. The camera may be comprised in, or comprise, or be associated with, a mobile device such as a mobile telephone or mobile computing apparatus (for example a personal digital assistant (PDA), a global positioning satellite (GPS) hand held device, a laptop computer, etc.) or a combination device that combines the functionality of such devices. The representation may identify the manner in which that representation was displayed and may also identify a specific instance of the displaying. The matching of the captured representation to the stored representations may be performed by a processor either local or remote to the capturing. Where the matching is performed remote from the capturing, the mobile device may transmit the captured representation to a server. The server can perform the matching and return the information to the mobile device. Service requests (for example, a request for a hotel booking) can also be transmitted to the server. The server may then return service information (for example, booking details) to the mobile device.

Another aspect of the invention provides a server comprising:
- a processor;
- memory; and
- a communications interface;
the server being operable to:
receive via the communications interface an image including a representation of a first entity, the representation being one of a plurality of representations of the entities displayed on a carrier, wherein each representation is a representation of a class entity and identifies a specific instance of the class, and wherein the specific instance identified by the representation included in the captured image is said first entity;
compare the received image to representations stored in the memory to find at least one match to the representation included in the received image, thereby to identify the class and specific instance of the class represented by the representation included in the image and further information relating to the first entity;
retrieve the information; and
output the information via the communications interface.

A further aspect of the invention provides a mobile device comprising:
- a processor;
- memory; and
- apparatus operable to capture an image including a representation of a first entity, the representation being one of a plurality of representations of entities displayed on a carrier, wherein each representation is a representation of a class of entity and identifies a specific instance of the class, and wherein the specific instance identified by the representation included in the captured image is said first entity;
the processor being operable to:
compare a captured image to representations stored in the memory to find at least one match to the representation included in the captured image, thereby to identify the class and specific instance of the class represented by the representation included in the image and further information stored in the memory which relates to the first entity; and
retrieve the information, and to output the information.

Another aspect of the invention provides a system comprising:
- a server as described above;
- a communications network; and
- a client comprising apparatus operable to capture an image including a representation of a first entity, the representation being one of a plurality of representations of entities displayed on a carrier, wherein each representation is a representation of a class of entity and identifies a specific instance of the class, and wherein the specific instance identified by the representation included in the captured image is said first entity;
the client being operable to transmit the captured image to the server via the communications network, the server being operable to:
receive the captured image;
compare the captured image to representations stored in the memory to find at least one match to the representation included in the captured image, thereby to identify the class and specific instance of the class represented by the representation included in the image and further information relating to the first entity;
retrieve the information; and
transmit the information to the client via the communications network.

A further aspect of the invention provides a computer program product comprising program instructions for controlling a server to perform the steps of:
- receiving an image including a representation of a first entity via a communication interface, the representation being one of a plurality of representations of entities displayed on a carrier, wherein each representation is a representation of a class entity and identifies a specific instance of the class, and wherein the specific instance identified by the representation included in the captured image is said first entity;
- comparing the received image to stored representations to find at least one match to the representation included in the received image, thereby to identify the class and specific instance of the class represented by the representation included in the image and further information relating to the first entity;
- retrieving the information; and
- outputting the information via the communications interface.

Another aspect of the invention provides a computer program product comprising program instructions for controlling a mobile device to perform the steps of:
- capturing an image including a representation of a first entity, the representation being one of a plurality of representations of entities displayed on the carrier, wherein each representation is a representation of a class of entity and identifies a specific instance of the class, and wherein the specific instance identified by the representation included in the captured image is said first entity;
- comparing the image to stored representations to find at least one match to the representation included in a captured image, thereby to identify the class and specific instance of the class represented by the representation included in the image and further information relating to the first entity;
- retrieving the information; and
outputting the information.

A computer program product for implementing the invention can be in the form of a computer program on a carrier medium. The carrier medium could be a storage medium, such as a solid state, magnetic, optical, magneto-optical or other storage medium. The carrier medium could be a transmission medium such as broadcast, telephonic, computer network, wired, wireless, electrical, electromagnetic, optical or indeed any other transmission medium.

Further aspects and advantages of the invention will become apparent from the following description of particular embodiments.

### BRIEF DESCRIPTION OF THE DRAWINGS

Embodiments of the present invention will be described hereinafter, by way of example only, with reference to the accompanying drawings in which like reference signs relate to like elements and in which:
Figure 1 is an overview of a network and a number of server and client devices in accordance with an example of the present invention;
Figure 2a shows a client device in the form a mobile telephone with image capturing means such as a digital camera;
Figure 2b shows the client device of Figure 2a from an angle from which the lens of the digital camera is visible;
Figure 3 is a functional block diagram of parts of a client device such as that shown in Figures 2a and 2b;
Figure 4 is a schematic of a server in accordance with an example of the present invention;
Figure 5 is a schematic of the memory space of a client device such as that shown in Figure 3;
Figure 6 shows a table which can be stored in a memory space such as that shown in Figure 6;
Figure 7 shows in greater detail, one of the entries of the table shown in Figure 6;
Figure 8 is a schematic of the memory space of a server such as that shown in Figure 4;
Figure 9 shows a table which can be stored in a memory space such as that shown in Figure 8;
Figure 10 shows in greater detail, one of the entries of the table shown in Figure 9;
Figure 11, 12, 13 and 14 shows a number of examples of representations of entities associated with geographical locations in accordance with examples of the present invention;
Figure 15 shows an example of a map bearing a representation of an entity associated with a geographical location in accordance with an example of the present invention;
Figure 16 shows an example of an image carrier (in the present case, a page from a magazine) bearing a representation of an entity associated with a geographical location in accordance with an example of the present invention;
Figure 17 is a flow diagram showing a number of steps in a method of obtaining information in accordance with an example of the present invention;
Figure 18 is another flow diagram showing a number of steps in a method of obtaining information in accordance with an example of the present invention.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the claimed invention.

### DESCRIPTION OF PARTICULAR EMBODIMENTS

Embodiments and examples are described hereafter by way of example only in the following with reference to the accompanying drawings.

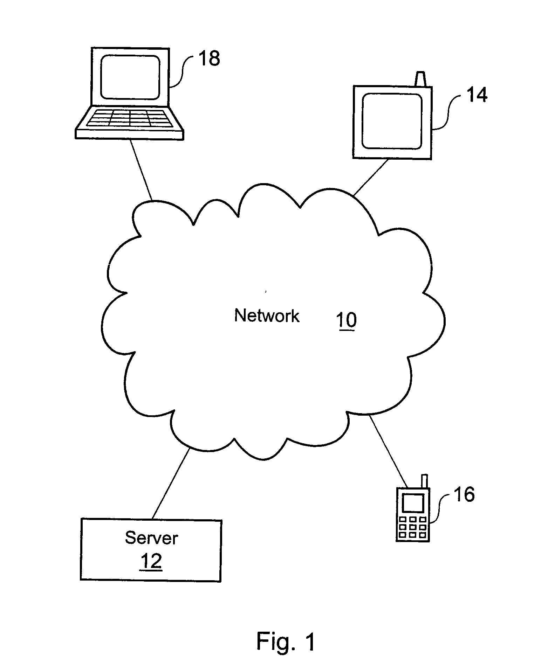

Figure 1 represents a schematic overview of a network including a server 12 and a plurality of client devices connected to the network. The client devices shown include a PDA 14, a mobile phone 16 and a computer 18. In the particular example to be described, it is assumed that the network 10 is a radio telephony network (e.g., a mobile or cellular telephone network), and that each of the devices shown include a transmitter/receiver connectable to the mobile telephone network. It is, however, to be understood that other forms of network such as the Internet, an intranet, or other wired or wireless network could be employed with the server and the devices being provided with appropriate communication interfaces to the network 10.

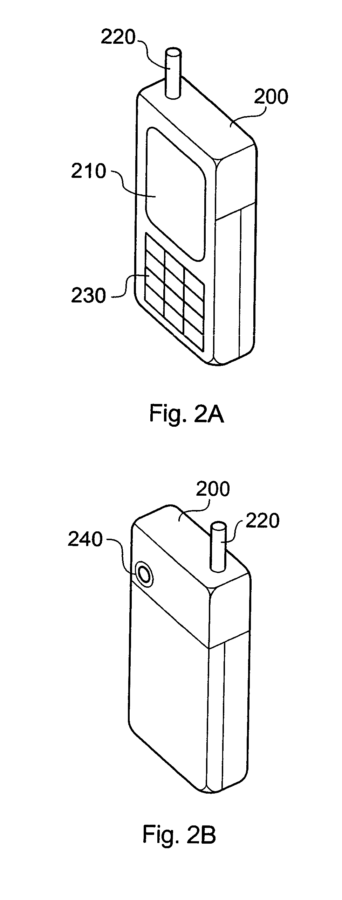

Figure 2A shows a front view of an example of a mobile device in the form of a mobile telephone 200 such as a smart phone. The telephone 200 includes a display 210 for displaying information such as names, telephone numbers and other text and pictures. The display 210 can also be used as a view finder when taking photographs using a digital camera which is incorporated into the telephone 200. An aerial 220 is provided in the telephone for connecting telephone 200 to the mobile telephone network. The telephone 200 further comprises a keypad 230 for inputting data such as text or menu commands.

Figure 2B shows a rear view of the mobile telephone 200 and shows a lens 240 of the camera which is included in the telephone 200.

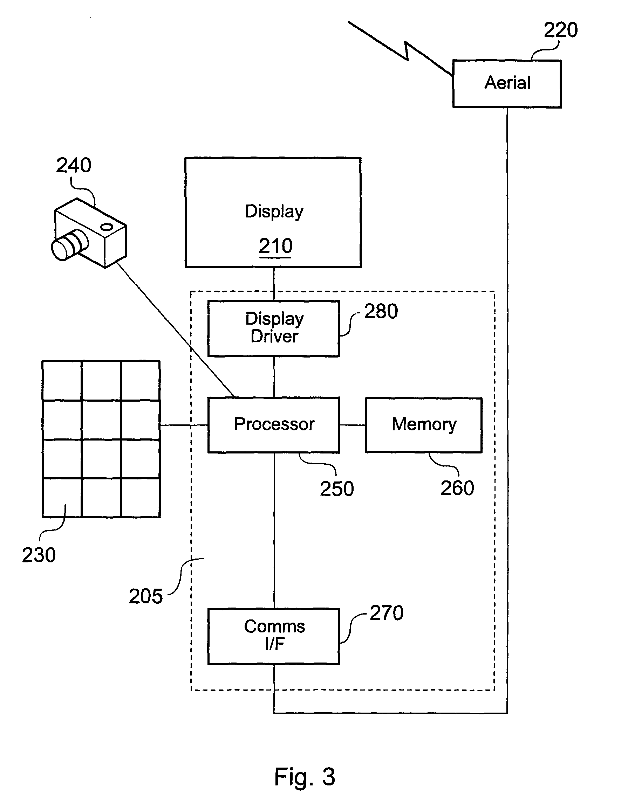

Figure 3 provides a schematic overview of functional components of the mobile device represented in Figures 2A and 2B. As shown in Figure 3, these functional components include the display 210, the keyboard 230 and the aerial 220 already mentioned. They also include a processor 250 which co-operates with a display driver 280 for controlling the display 210, a memory 260 for storing program information and data, image capture device 240, and a communication interface 270 for interfacing with the aerial 220. The processor 250, display driver 280, memory 260 and communications interface 285 can be provided by one or more integrated circuits represented generally at 205. At least a portion of the image capture device 240 may also be comprised in circuitry 205.

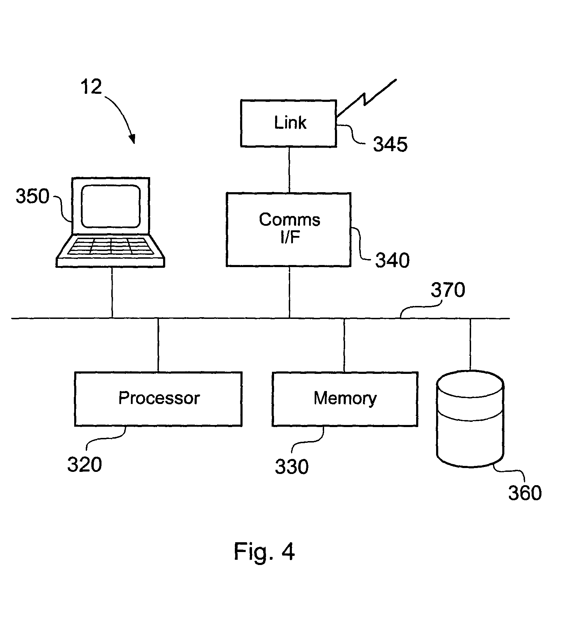

The image capture device (or image capturing means) 240 is shown schematically in Figure 4 in the form of a camera connected to a mobile telephone 200 as an example of a mobile device 200. The image capture device could be in the form of a still or video camera (e.g. with a still capture mode) that is connected or connectable to the mobile device 200. The connection could be by means of a wired connection (e.g. a Universal Serial Bus (USB), a firewire connection, etc), or it could be wireless connection (e.g., a Bluetooth connection). Alternatively, the image capture device could be integral to the mobile device. For example the mobile device could be a mobile telephone with an integral camera as shown in Figure 2. The mobile device could alternatively be a mobile telephone, a PDA, a GPS device, a computer etc. Also, the mobile device could be a still or video camera that incorporates the functionality of a mobile telephone, a PDA, a computer, etc. Indeed, the device could be a so-called crossover device that integrates the functionality of one or more of a camera, a mobile telephone, a PDA, a computer, a GPS positioning device, etc. In the context it should also be understood that the "mobile device" could be in the form of a personal or desktop computer or the like.

Figure 4 provides a schematic overview of the functional components of an example of a server 12 in the form of a computer system. As is shown in Figure 3, these functional components include a processor 320 and memory 330. Storage 360 may be provided for storing large quantities of information. Storage 360 may for example comprise a hard disk drive, CD-ROM and/or other mass storage devices. One or more peripheral devices such a keyboard and monitor 350 may be provided. The server 12 can also comprise a communication interface 340 for interfacing with the communications link 345. The server is thereby connectable to a network such as that discussed in relation to Figure 1.

Information relating to one or more entities at geographical locations (such as a public house, golf course or so forth) may be stored in a mobile device such as that described in relation to Figures 2 and 3 and/or at a server such as that described in relation to Figure 4.

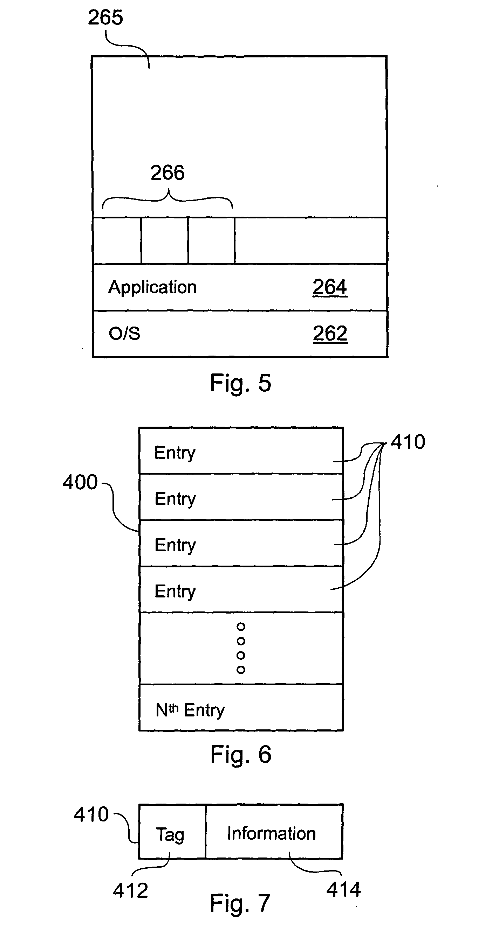

Figure 5 shows a schematic of the memory space 265 of the memory 260 of the mobile device 200. Operating System 262 occupies a section of the memory space 265 as do one or more software applications 264. Also present in the memory space are one or more portions 266 which can be used to store entity information relating to one or more entities, each entity being associated with a geographical location.

Figure 6 shows an example of how the entity information can be arranged in the portions 266 of memory space 265. A table 400 comprises a number of entries 410, each entry being operable to store a quantity of information relating to an entity. Such information may include for example, a telephone number, an email address, booking information, cinema screening times and so forth.

Figure 7 shows one of the entries 410 in more detail. Comprised in the entry 410 can be a tag portion 412 which is used to reference the table entry and associate it with the appropriate entity or entities. Also comprised in the entry can be one or more information portions 414 which can store the information relating to the tagged entity.

In order that the entity information be kept up to date, the mobile device 200 may be operable to receive updates. Updates may for example be received through the mobile telephone network via the communications interface 270 and aerial 220. Alternatively, the mobile device 200 may be operable to receive memory devices such as a memory card conforming to the Personal Computer Memory Card International Association (PCMCIA) standard. Such memory devices may be accessed by the mobile device to receive up to date entity information.

The mobile device 200 maybe operable to retrieve the stored entity information and output it, for example by displaying it on the display 210. Where the memory capacity and other specifications of the mobile device 200 permit, it is also envisaged that entity information may include audio files. Audio files may be outputted by playing them on a speaker of the mobile device 200.

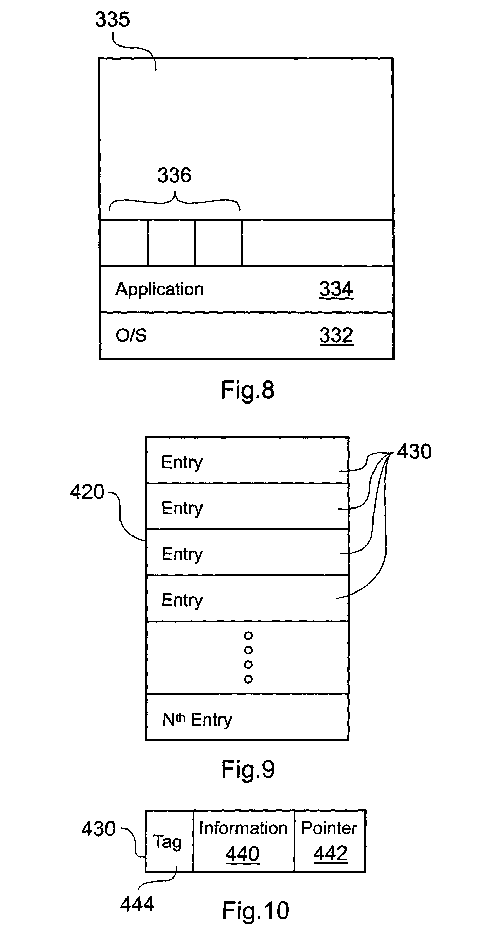

While it has been described here that information concerning the entities can be stored locally at a mobile device, it is also envisaged that the mobile device be connectable to server. Information concerning the entities could then be stored at the server and provided to the mobile device upon demand. The mobile device 200 may then be operable to output the entity information as described above. Accordingly, an example of storing entity information at a server is now described in relation to Figures 8 to 10.

Figure 8 shows a schematic of the memory space 335 of the memory 335 of a server 12 such as that shown in Figure 4. The memory space 335 includes portions which are associated with the operating system 332 of the server 12 and one or more software applications 334 respectively. One or more portions 336 can also be provided for storing entity information.

Figure 9 shows an example of how the entity information can be arranged in the portions 336 of memory space 335. A table 420 comprises a number of entries 430, each entry being operable to store a quantity of information relating to an entity. Instead of storing all of the entity information in table entries, the table may store references to further information. Such further information may be stored, for example, in mass storage such as that provided by storage 360 discussed in relation to Figure 4.

Figure 10 shows an example of an entry 430 in more detail. Comprised in the entry 430 can be a tag portion 444 which is used to reference the table entry and associate it with the appropriate entity or entities. Also comprised in the entry can be one more information portions 440 which can store entity information relating to the tagged entity. As described above, the table may include a number of references to further information. To implement this, each table entry 430 may include one or more link portions 442 containing links to information stored elsewhere. Each link may for example refer to another table entry 430, to other portions of memory space 335, to information stored in mass storage such as storage 360, or to information stored elsewhere on a network, for example on another server accessible via, for example, the Internet.

While in the examples given above, the entity information has been described as being stored in table format either at a mobile device or at a server, it is envisaged that other ways of storing and arranging the information could be used. For example, storage methods involving relational databases, linked lists, hierarchical arrangements and combinations thereof may also be used to store information at both the mobile device and/or the server. For example, while it has been described that links be used in relation to entity information stored at a server, such links may also be used in mobile devices. In one example, links may be used in the memory space 265 of a mobile device 200 to refer to information stored in a received Personal Computer Memory Card International Association (PCMCIA) card, a Subscriber Identity Module (SIM) card, smart card, or other form of memory device.

Accordingly there have been described examples of mobile devices and servers, each of which may be operable to store entity information.

To obtain information concerning a particular entity or group of entities (for example a hotel or a group of hotels based in or near to a particular geographical location), a representation of the entity or entities may be captured and used to infer entity information stored at a mobile device and/or server.

It is envisaged that representations may for example be provided locally to the entity itself such as on a sign or wall of a public house, in a hotel room or on the menu of a restaurant. Alternatively, representations may be displayed remotely from the entity. For example, representations may be displayed in a magazine, in a newspaper or on a flyer or leaflet. By providing a representation in an advertisement or such like, further information relating to the advertised entity other than that information which is explicitly disclosed in the advertisement may be obtainable using the methods described below. Representations may also be displayed on maps whereby the representation may be displayed at or near to the mapped geographical location at which the entity is located.

The representation may comprise a graphical representation. An example of a mobile device as described above may be operable to capture the representation by using the image capture device incorporated into, or associated with the mobile device and the captured representation can then be used to infer entity information relating to the entity in question.

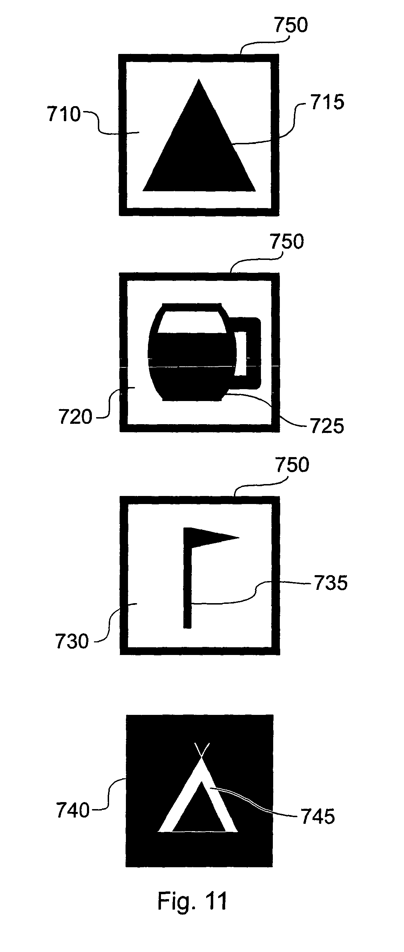

Figures 11 to 14 show examples of representations of a number of entities. In each of the examples shown in Figures 11 to 14, the representations are graphical representations which comprise a symbols similar to those which are used on maps to refer to certain classes of entity. For example, in Figure 11 the representations comprise mapping symbols which represent a youth hostel 715, a public house 725, a golf course 735 and a camping site 745. Representations 710, 720 and 730 each comprise a border 750 which can be used during image processing of the representation to delimit the outer edges of the representation. This process is described in more detail below.

Various alternative arrangements can be envisaged in the case of graphical representations. For example, while representations 710, 720 and 730 comprise a light (e.g. a white, yellow, cream) background and a dark (e.g., a black, red or blue) mapping symbol 715, 725, 735 surrounded with a dark (e.g., a black, red or blue) border 750, representation 740 comprises a light (e.g. a white, yellow, cream) mapping symbol 745 on a dark (e.g., a black, red or blue) background. No separate border may be required in the case of representation 745 since the outer edges of the representation are well delimited by the dark background, however this can depend on the colour or tone of the surface on which the representation is located. In choosing the form of a graphical representation, it has to be borne in mind that the representation should be easily able to be captured and comparable to other representations using, for example, image processing (e.g., image comparison or image recognition) software. Accordingly, it is not essential that two-tone graphical representations be used (e.g. black/white, red/white, blue/yellow, etc) so long as the representation is easily recognisable. Indeed, colours used in a graphical representation may be used to encode information as described below.

It is also envisaged that the representation may include elements not visible to the naked eye under normal lighting conditions. For example, a representation may be printed using ink which fluoresces when illuminated by light comprising suitable wavelengths. In one such example, a representation may be configured to fluoresce (and thereby become captureable in an image) when illuminated by an infra-red projector of a mobile device such as a camera. In other examples, the representation may be printed in ink invisible to the human eye yet visible to image capturing apparatus operable to detect light outside the visible spectrum. In some such examples, some parts of the representation may be visible while others may not, or different parts of a representation may appear to be of the same colour to the human eye and yet have a different colour when viewed outside the visible spectrum.

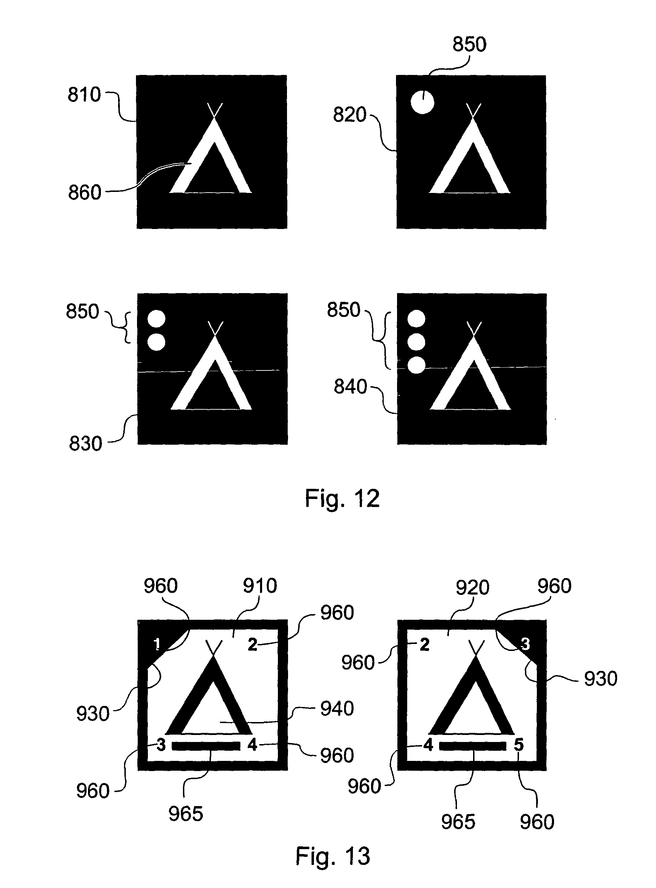

In the examples shown in Figure 11, each representation can represent either a class of entities or an instance of that class. In order that a particular type of representation be able to represent more than one instance or a group of instances within a class, further indications can be added. An example of such an indicator is illustrated in Figure 12.

Figure 12 shows four representations, each of which can be used to represent a camp site or group of camp sites. Representation 810 is similar to the representation 740 shown in Figure 11. The remaining representations 820, 830 and 840 each comprise a number of white dots 850 positioned in the top left hand comer thereof. These dots (and indeed, the absence of such dots as is the case in representation 810) can be used to differentiate between different camp sites or groups of camp sites. For example, representations 810 and 830 may be used to represent first and second camp sites while representations 820 and 840 may be used to represent first and second groups of camp sites which may or may not include the first or second camp sites. Thus by incorporating an indicator into each representation, it is possible to use those representations to distinguish between many different entities.

In some examples, by using representations which include at least portion which is not visible to the naked eye (as described above), the representation itself may be increased in size and thereby include more indicator features or such like, while not using an overly large amount of display space (at least apparently not to the human eye).

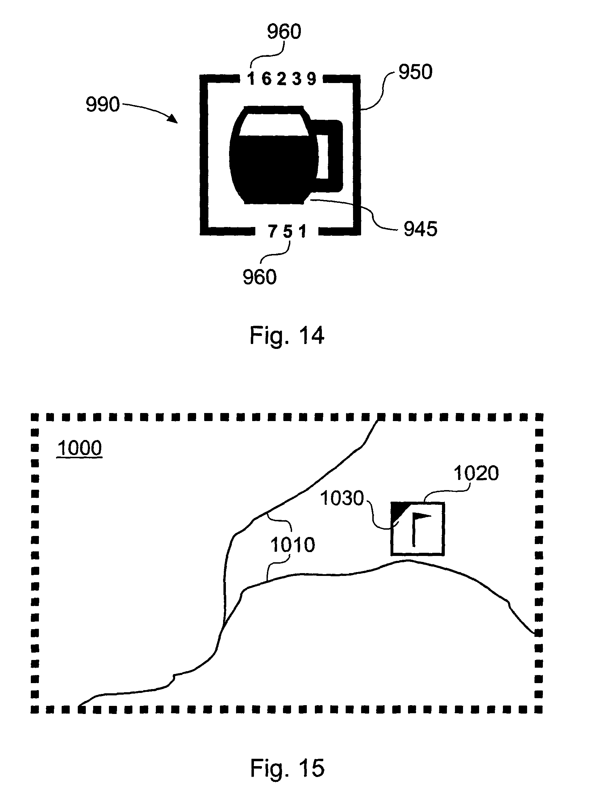

Figure 13 shows another example of how indicators associated with a representation can be used to increase the number of entities a particular type of representation can represent. In Figure 13, each representation 910, 920 includes a first indicator portion 930 which comprises a dark triangle located in one of the comers adjacent the border. The particular comer which is occupied by the triangle can be used to at least partially identify a particular entity or group of entities which belong to the class of entities (in this case, camp sites) which the representation represents. Since there are four comers, and since each comer may or may not be occupied by a triangle, this manner of indicator can be used to distinguish between a total of 2⁴=16 entities or groups of entities. Also present in the representations 910 and 920 are four alphanumerical characters, in this case, numbers. These numbers can also be used to specify a particular entity or group of entities. The alphanumerical characters may be arranged in various positions within the representation. For example, while in the examples shown in Figure 13, the symbols 960 are situated at each of the four comers of the representation, in the example shown in Figure 14, two sets of symbols 960 are each positioned within the border 950 of the representation 990. Indeed, as with the triangles 930 in the examples shown in Figure 13, the actual position at which the symbols appear can be used to encode information relating to the entity or group of entities represented.

The size of an indicator in a graphical representation may also be used to encode information. For example, each of the representations 910, 920 shown in Figure 13 comprises a bar 965. In this example, the length and/or width of the bar could be used to at least partially encode the identity of the entity or entities represented. Furthermore, as indicated above, the colours and/or colour combinations used in the representation could be used to encode such information.

Also, the indicators can be used not only to indicate an instance of the entity represented by the representation, it can also be used to indicate where the representation is displayed. For example, the indicators can identify a particular map on which the representation is displayed, a magazine in which the representation is published, the fact that it is actually displayed at a physical geographic location, etc.

As described above, representations can be displayed at suitable locations so that they may be conveniently captured and used to infer entity information stored either local or remote to the capturing. In the case of graphical representations, these types of representation can be displayed in any location at which their capture by an image capturing apparatus is convenient.

The indicators can be in alphanumeric form to facilitate reading thereof by a user, but this need not be the case, as illustrated by the examples of the graphical indicators in Figures 12 and 13.

Figure 15 shows an example in which a graphical representation 1020 is displayed on a map 1000. In the present example, the representation 1020 represents a golf course. The representation 1020 comprises an indicator 1030 comprising a triangle such as that described above and is thereby able to distinguish the golf course represented from other golf courses which may be represented elsewhere. The representation 1020 is displayed on the map 1000 at a position which corresponds to the geographical location of the physical golf course, namely next to one of the roads 1010 which are also shown on the map. For example, if the only indicator used in the example of Figure 15 is the presence or absence of the triangle at the four corners of the representation, 2⁴=16 different golf courses could be identified on the map in question. Of course, other forms of indicators could be used in addition to the presence or absence of the triangles, or instead thereof to enable an appropriate number of instances of the golf course to be identified.

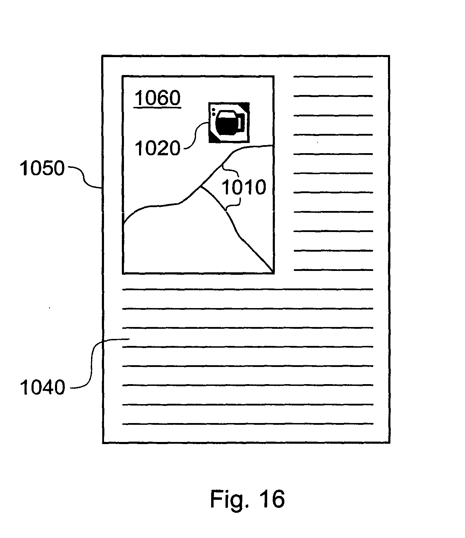

Another example of the displaying of a representation is shown in Figure 16. Figure 16 shows a page from a magazine which includes a review for a public house. The page comprises text 1040 and a map 1060. On the map 1060 is displayed a representation of the public house, which representation includes an indicator particular to the actual public house being reviewed. Also comprised in the review may be an image (photograph or drawing for example) of the public house. In the example shown, two dots are displayed in the left hand upper comer and a triangle is shown in the upper right hand and lower left hand comers. In this example, the combination of dots and triangles could be used to identify the magazine in which the article appeared and the public house being reviewed. Of course, other forms of indicators could be used in addition to the presence or absence of the dots and triangles, or instead thereof, to enable an appropriate number of instances of the class of entity (e.g., public houses) and locations of the representation (e.g., magazines) to be identified.

In both of the examples shown in Figures 15 and 16, the representation can be conveniently captured using an image capture device. When the representation is captured by the image capture device 240 (Figure 2) the captured image can include information around the representation. Accordingly, the representation itself should be chosen to be distinctive with respect to its surrounding as discussed above.

In one example, a class and particular instance of a class of represented entity can be identified by matching the captured image to stored representations. A best match of the captured image to one of the stored representations can thus be identified as equivalent to a captured representation in the captured representation. As discussed with regard to Figures 6, 7, 9 and 10, the recorded instances of the representations are associated with information for the instances of the entities corresponding thereto.

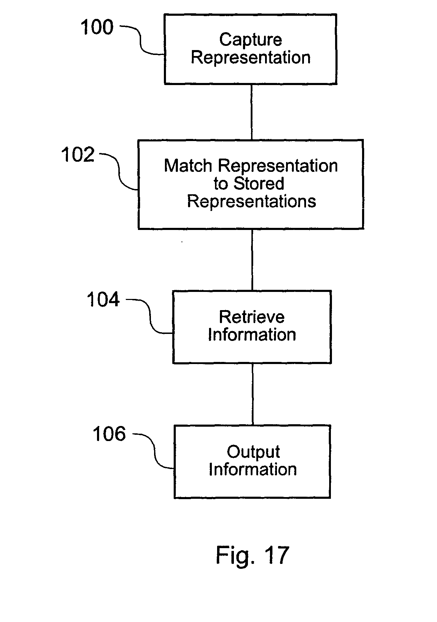

Figure 17 is a flow diagram of an example of a method of obtaining information corresponding to an entity at a geographical location using an image capture device that is provided with a processing device having local processing capability. The representation may be captured by an image capture device such as a camera. The camera may be comprised in, or comprise, or be associated with, a mobile device such as a mobile telephone or smartphone, or mobile computing apparatus (for example a PDA, a GPS hand held device, a laptop computer, etc.) or a combination device that combines the functionality of such devices, subject to the local device being provided with adequate processing and storage capability.

In step 100, the user can select an image capture mode of the image capture device. An image of a representation of an entity, for example a mapping symbols as described with reference to Figures 11 to 16, can thereby be captured, for example at a particular location on a particular map. The image captured by the image capture device can then be supplied to the local processing device in an appropriate image format.

In step 102, the captured image can be compared to stored representations held in memory of the processing device. An image matching operation can be performed using any appropriate matching algorithm to compare the captured image to the stored representations. For example, a mean squared error (MSE) algorithm could be used to compare image similarity. In some examples, a package such as ARToolkit, a vision-based Augmented Reality software developers package could be used (information regarding this package can be obtained at http://www.hitl.washington.edu/research/shared space/). ARToolkit uses a correlation coefficient as its image matching methodology.

In step 104, when a best match is determined, information held in the memory of the local device and associated with the best-matched representation can be retrieved. As indicated earlier, the information can be associated with the representation by means of a table, a set of links, etc.

The retrieved information can be information about the entity at the geographical location, for example in the form of text and/or images. There is no limit on the sort of information that can be provided. For example, for a campsite, the information could be the full address and contact telephone and fax numbers for the campsite, a website and/or email address for the campsite, the number of places at the campsite, facilities at the campsite, periods of opening, etc. For a public house, the information could include full address and contact telephone and fax numbers for the public house, a website and/or email address for the public house, opening times, a sample menu, or the current day's menu, etc.

In step 106, the retrieved information is output to the user. This can, for example, be by displaying the information visually on a display of the processing device, or by providing an audio output, or a combination thereof.

The information about the entities held in the processing device, for example a mobile device, can be updated regularly or in response to a user request, as required. For example, if the processing device is provided with a media reader, for example for reading a CD or DVD, or for reading a solid state storage device, then the updates can be provided on such media. Alternatively updated information can be downloaded, for example from a server via a wired or wireless link as appropriate. In this manner up to date information can be provided in the processing device local to the image capture apparatus.

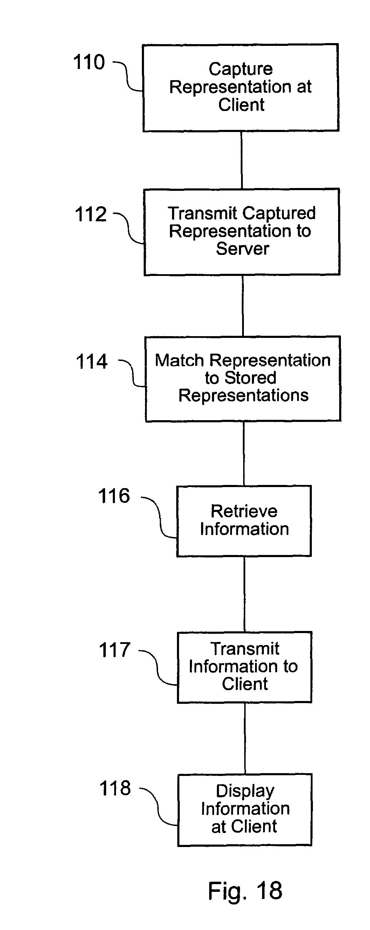

Figure 18 is a flow diagram of another example of a method of obtaining information corresponding to an entity at a geographical location using an image capture device using a remote source for the information. In this case the image capture device can be associated with or incorporated in a local device that can, but does not need significant storage or processing device. Such a device could also be described as a thin client, relying on the remote processing capability. The representation may be captured by an image capture device such as a camera. The camera may be comprised in, or comprise, or be associated with, a mobile device such as a mobile telephone or smartphone, or mobile computing apparatus (for example a PDA, a GPS hand held device, a laptop computer, etc.) or a combination device that combines the functionality of such devices.

In step 110, the user can select an image capture mode of the image capture device. An image of a representation of an entity, for example a mapping symbol as described with reference to Figures 11 to 16 can thus be captured, for example at a particular location on a particular map. The image is captured by the image capture device can then be supplied to the local (client) device in an appropriate image format.

In step 112, the captured image is transmitted to a server. This can be performed by the local device in response to manual user input. Alternatively, this can be performed automatically in response to the selection of a particular image capture mode of the image capture device. The transmission of the capture image to the server can be achieved via a wireless connection or a wired connection over a radio telephony network, a data network, the Internet, etc. The captured image can be compressed prior to transmission, as appropriate. The, possibly compressed, image, can be encoded as a query for transmission in one or more message packets. The message packets can identify the query and can include appropriate routing information, for example information identifying the destination server and the originating local client device.

In step 114, the message packet(s) containing the captured image can be decoded by the server. The server can be operable to identify the query, and where appropriate to decompress the captured image. The captured image can then be compared to stored representations held in memory of the server. An image matching operation can be performed using any appropriate matching algorithm to compare the captured image to the stored representations. For example, methods such as those indicated above in relation to step 102 of Figure 17 could be used.

In step 116, when a best match is determined, information held in the memory and associated with the best-matched representation is retrieved. As indicated earlier, the information can be associated with the representation by means of a table, a set of links, etc.

In step 117, the retrieved information about the entity corresponding to the captured representation can be returned to the client device using the routing information for the originating client device contained in the message packets sent from the client device with the original query. The information that it returned to the client device can be formatted in packets that include suitable routing information and can also include information identifying the packets as the response to the original query.

The retrieved information can be information about the entity at the geographical location, for example in the form of text and/or images.

In step 118, the retrieved information is output to the user. This can, for example, be by displaying the information visually on a display of the processing device, or by providing an audio output, or a combination thereof.

There is no limit on the sort of information that can be provided, as described above with reference to Figure 17. Alternatively, the information could establish an exchange in which an order can be placed. For example, the information could define a booking form that the user could complete and send to the entity or an organisation responsible for the entity (e.g., using a web enabled form) via the server, or directly to a website or email address for the entity.

By accessing the remote server to retrieve the required information, the most up to date information possible can be provided to the user in response to capturing the image of the representation of the instance of the class of entity concerned. The information stored by the server can be updated when new or updated information concerning entities becomes available.

Access to the server to retrieve information may be allowed on a subscription basis. For example, only subscribers or other authorised users may be given access to the server to retrieve information.

In some examples, the comparison of a captured image to stored representations may yield more than one best match. This may arise due to an inability of matching steps such as those discussed in relation to Figures 17 and 18 to identify any one stored representation in preference to other stored representations. For example, an excessive amount of noise or distortion in the representation in the captured image may preclude the possibility of finding a single best match to within a tolerable degree of certainty. Also the matching step itself may intentionally involve identifying more than one match, even where tolerable limits of certainty have been met. For example, the matching step may involve identifying matches not directly associated representation in the captured image, but which are related thereto. An example of this would be identifying one or more additional pubs located within a given geographical radius of the pub represented by the representation in a captured image.

In cases such as those described above, a list of candidate best matches may be produced. Referring once more to Figure 17 for example, step 102 may further involve producing a list of best matches and outputting the list to a user. The user may then select a match from the list. In step 104, information relating to the match chosen by the user can be retrieved.

Referring to Figure 18, step 114 may further involve producing a list of best matches and transmitting the list to the client device. The list may then be outputted at the client device and the user can chose a match. An indication of the chosen match may then be transmitted to the server and the server can proceed to step 116 and retrieve information relating to the chosen match. Following step 118, the user may continue to chose further matches from the list and further information can be retrieved and transmitted to the client for output.

The local client device, e.g., a mobile phone, could be operable to cache information retrieved from the remote server, whereby the retrieved information is subsequently available directly in the local client device and avoiding the need to query the remote server again in order to re-output the same information. The cached information could be deleted automatically, or in response to user input, after a predetermined time, to avoid the user being provided with out of date information. The time before deletion of the cached information could depend, for example, on the type of information cached. For example, if the type of information is reasonable static, then it could be held for longer than if the information is transient.

Accordingly, there has been described, a method and apparatus for retrieving information about an entity at a geographical location by capturing a representation of the entity and by matching the captured representation to stored representations. Information relating to the entity can thereby be identified and outputted. The matching can be performed either locally or remotely to the capturing of the representation.

In one embodiment, a mobile device such as a mobile telephone comprising a camera captures an image of the representation and transmits it to a server. The server then performs the matching, retrieves the information relating to the entity and returns it to the mobile device for outputting.

In one embodiment, a representation may be a representation of a road. The representation may, for example, be a graphical representation that appears on a map or on a road sign. The graphical representation may include the name and/or number of the road surrounded by a border as described above, plus additional indicators such as an indicator for identifying where the representation is displayed (map, road sign, travel guide etc.). By following a method such as that described in relation to Figure 17 and in particular to Figure 18, a user can obtain up-to-date information concerning the road. The information may, for example, include traffic information, news about road works, point-to-point estimations of journey times when travelling via that road, news on temporary speed limits, weather conditions (foggy, icy), accidents and so forth. In some embodiments, the user may be provided with a menu from which information concerning roads other than the road represented by the representation may be accessible.

In one embodiment a representation may be a representation of a travel terminal such as an airport, a train or bus station or stop, a taxi stand or a port. The representation may, for example, be a graphical representation that appears on a map, in a travel brochure or a magazine, on a timetable (such as a train timetable), on a bus, train taxi etc., or at the travel terminal itself. At a travel terminal, the representation could be provided on, for example, a bus stop sign or a departure/arrivals board. This would allow departure/arrival information to be accessed even when the sign or board is malfunctioning. By following a method such as that described in relation to Figure 17 and in particular to Figure 18, a user can obtain up-to-date information concerning the travel terminal. The information may include up-to-date information concerning arrival and departure times, destinations and/or routes, delays and so forth, as well as information relating to particular airlines, train/bus/ferry/taxi companies which operate from the travel terminal in question. Instead of being a representation of a travel terminal, in similar embodiments the representation may be a representation of an airline or train/bus/ferry/taxi company, or it may be a representation of a destination or route. The entity information in such cases may include links to information concerning travel terminals that lie upon a given route or located at a particular destination or which are used by the airline or train/bus/ferry company in question.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method of obtaining information concerning a first entity, the method comprising:
an apparatus capturing an image including a representation of the first entity, the representation being one of a plurality of representations of entities displayed on a carrier, wherein each representation is a representation of a class of entity and identifies a specific instance of the class, and wherein the specific instance identified by the representation included in the captured image is said first entity;
comparing the captured image to stored representations to find at least one match to the representation included in the captured image, thereby to identify the class and specific instance of the class represented by the representation included in the image and further information relating to the first entity; and
retrieving the information and outputting the information.

2. The method of Claim 1, wherein the first entity is an entity associated with a geographical location.

3. The method of Claim 1 or Claim 2, wherein each of the plurality of representations displayed on the carrier is a graphical representation.

4. The method of any preceding claim, wherein each of the plurality of representations displayed on the carrier includes an identifier identifying the specific instance of the class of entity.

5. The method of Claim 4, wherein the identifier comprises an alphanumeric indicator.

6. The method of Claim 4 or Claim 5, wherein the identifier is integral to the representation.

7. The method of Claim 6, wherein the position of at least a portion of the identifier within the representation at least partially identifies the specific instance of the class of entity.

8. The method of any of Claims 3 to 7, wherein the representation comprises a border defining an outer edge of the representation.

9. The method of Claim 3 or any Claim dependent thereon, wherein the representation comprises a mapping symbol.

10. The method of any of Claims 2 to 9, wherein the representation of the entity is displayed at the physical geographical location.

11. The method of any preceding claim, wherein the carrier includes a representation of a geographical location for the first entity.

12. The method of Claim 11, wherein the representation of the geographical location comprises an image of the geographical location.

13. The method of any preceding claim, wherein the carrier comprises a map and wherein the representation of the first entity is displayed at a position on the map representative of a geographical location for the entity.

14. The method of any of any preceding claim, wherein the representation of the entity identifies display information relating to the displaying of the representation.

15. The method of Claim 14 when dependent upon Claim 10, wherein the display information includes an indication that the representation of the entity was displayed at the physical geographical location.

16. The method of any preceding claim, wherein the display information identifies the carrier.

17. The method of Claim 13 or any claim dependent thereon, wherein the display information includes an indication that the representation of the entity was displayed on a map and wherein the display information includes information relating to the map.

18. The method of any preceding Claim, wherein the apparatus which captures the image comprises a camera.

19. The method of any preceding Claim, wherein the comparing of the captured image to stored representations is performed by a processor.

20. The method of Claim 19, wherein the comparing of the captured image to stored representations is performed by a processor local to the capture of the image.

21. The method of Claim 19, wherein the comparing of the captured image to stored representations is performed by a processor remote from the capture of the image.

22. The method of Claim 21, wherein the capture of the image is performed by a camera associated with a mobile device, the mobile device being operable to transmit at least a portion of the captured image to a server, the server being operable to perform the matching of the captured image to stored representations, to retrieve the information and to return the information to the mobile device.

23. The method of Claim 22, wherein the mobile device is operable to transmit a service request relating to the first entity to the server.

24. The method of Claim 23, wherein the server is operable to respond to the service request by returning service information to the mobile device.

25. The method of Claim 23 or Claim 24, wherein the service request is comprised in the representation.

26. The method of any preceding Claim, wherein the information relating to the first entity comprises information describing the first entity.

27. The method of any preceding Claim, wherein the information relating to the first entity comprises information giving directions to a geographical location for the first entity.

28. The method of any preceding Claim, wherein the first entity comprises a plurality of sub-entities and wherein the information relating to the first entity comprises information relating to at least a portion of the sub-entities.

29. The method of any preceding Claim, further comprising identifying a best match from the at least one match to the representation of the first entity.

30. A carrier having a plurality of representations of entities displayed thereon, wherein each representation is a representation of a class of entity and identifies a specific instance of the class, and wherein the specific instance identified by at least a first representation is a first entity.

31. The carrier of Claim 30 comprising a map.

32. A server comprising:
- a processor;
- memory; and
- a communications interface;
the server being operable to:
receive via the communications interface an image including a representation of a first entity, the representation being one of a plurality of representations of the entities displayed on a carrier, wherein each representation is a representation of a class entity and identifies a specific instance of the class, and wherein the specific instance identified by the representation included in the captured image is said first entity;
compare the received image to representations stored in the memory to find at least one match to the representation included in the received image, thereby to identify the class and specific instance of the class represented by the representation included in the image and further information relating to the first entity;
retrieve the information; and
output the information via the communications interface.

33. The server of Claim 32 operable to output via the communications interface a list identifying each of the at least one matches.

34. The server of Claim 32 operable to receive via the communications interface an indication indicating a best match from the at least one matches in the list and to output information corresponding to the best match via the communications interface in response thereto.

35. A mobile device comprising:
- a processor;
- memory; and
- apparatus operable to capture an image including a representation of a first entity, the representation being one of a plurality of representations of entities displayed on a carrier, wherein each representation is a representation of a class of entity and identifies a specific instance of the class, and wherein the specific instance identified by the representation included in the captured image is said first entity;
the processor being operable to:
compare a captured image to representations stored in the memory to find at least one match to the representation included in the captured image, thereby to identify the class and specific instance of the class represented by the representation included in the image and further information stored in the memory which relates to the first entity; and
retrieve the information, and to output the information.

36. The mobile device of Claim 35 operable to output a list identifying each of the at least one best matches.

37. The mobile device of Claim 36 operable to receive an indication indicating a best match from the at least one matches in the list and to output information corresponding to the best match in response thereto.

38. The mobile device of any of Claims 35 to 37, wherein the apparatus operable to capture an image comprises a camera.

39. The mobile device of Claim 38, wherein the camera is integral with the mobile device.

40. The mobile device of any of Claims 35 to 39, wherein the mobile device is a mobile computing apparatus.

41. The mobile device of any of Claims 35 to 40, wherein the mobile device is a mobile telephone.

42. A system comprising:
- a server according to any of claims 32 to 34;
- a communications network; and
- a client comprising apparatus operable to capture an image including a representation of a first entity, the representation being one of a plurality of representations of entities displayed on a carrier, wherein each representation is a representation of a class of entity and identifies a specific instance of the class, and wherein the specific instance identified by the representation included in the captured image is said first entity;
the client being operable to transmit the captured image to the server via the communications network, the server being operable to:
receive the captured image;
compare the captured image to representations stored in the memory to find at least one match to the representation included in the captured image, thereby
to identify the class and specific instance of the class represented by the representation included in the image and further information relating to the first entity;
retrieve the information; and
transmit the information to the client via the communications network.

43. The system of Claim 42, wherein the server is operable to transmit to the client a list identifying each of the at least one best matches.

44. The system of Claim 43, wherein the client is operable to transmit to the server an indication indicating a best match from the at least one matches in the list, and wherein the server is operable to transmit to the client information corresponding to the best match in response thereto.

45. The system of any of Claims 42 to 44, wherein the apparatus operable to capture an image comprises a camera.

46. The system of Claim 45, wherein the camera is integral with the client.

47. The system of any of Claims 42 to 46, wherein the client is a mobile computing apparatus.

48. The system of any of Claims 42 to 47, wherein the client is a mobile telephone.

49. A computer program product comprising program instructions for controlling a server to perform the steps of:
- receiving an image including a representation of a first entity via a communication interface, the representation being one of a plurality of representations of entities displayed on a carrier, wherein each representation is a representation of a class entity and identifies a specific instance of the class, and wherein the specific instance identified by the representation included in the captured image is said first entity;
- comparing the received image to stored representations to find at least one match to the representation included in the received image, thereby to identify the class and specific instance of the class represented by the representation included in the image and further information relating to the first entity;
- retrieving the information; and
- outputting the information via the communications interface.

50. A computer program product comprising program instructions for controlling a mobile device to perform the steps of:
- capturing an image including a representation of a first entity, the representation being one of a plurality of representations of entities displayed on the carrier, wherein each representation is a representation of a class of entity and identifies a specific instance of the class, and wherein the specific instance identified by the representation included in the captured image is said first entity;
- comparing the image to stored representations to find at least one match to the representation included in a captured image, thereby to identify the class and specific instance of the class represented by the representation included in the image and further information relating to the first entity;
- retrieving the information; and
- outputting the information.

51. The computer program product of Claim 49 or Claim 50 on a carrier medium.
